# NEUE EUROPÄISCHE PATENTSCHRIFT

(11) **EP 1 032 839 B2**
(45) Veröffentlichungstag und Bekanntmachung des Hinweises auf die Entscheidung über den Einspruch: **25.10.2006**
(45) Hinweis auf die Patenterteilung: 09.05.2001
(21) Anmeldenummer: 98963486.0
(22) Anmeldetag: 19.11.1998
(51) Int. Cl.: C12Q 1/68

(54) **VORRICHTUNG ZUM AUTOMATISCHEN DURCHFÜHREN DES PCR-VERFAHRENS**
APPARATUS FOR AUTOMATIC IMPLEMENTATION OF THE PCR METHOD
SYSTEME DE MISE EN OEUVRE AUTOMATIQUE DU PROCÉDÉ PCR

(30) Priorität: 19.11.1997 DE 29720432 U
(43) Veröffentlichungstag der Anmeldung: 06.09.2000
(73) Patentinhaber: F.HOFFMANN-LA ROCHE AG, 4070 Basel (CH)
(72) Erfinder: HEIMBERG, Wolfgang, D-85560 Ebersberg (DE); WEICHSELGARTNER, Michael, D-85560 Ebersberg (DE); GREBER, Martin, D-85560 Ebersberg (DE); KUTSCH, Peter, D-83022 Rosenheim (DE)
(74) Vertreter: Ganahl, Bernhard
(86) Internationale Anmeldenummer: PCT/EP1998/007423
(87) Internationale Veröffentlichungsnummer: WO 1999/026070

(56) Entgegenhaltungen:
- EP-A2- 0 201 184
- DE-A1- 4 412 286
- US-A- 5 443 791

## Beschreibung

Die Erfindung betrifft eine Vorrichtung zum automatischen Durchführen des PCR-Verfahrens, mit einer Pipettiereinrichtung und einem Thermocycler, wobei die Pipettiereinrichtung einen Pipettierarm zum Pipettieren von Probensubstanzen und/oder Chemikalien aufweist.

Aus der US 5,443,791 geht eine Vorrichtung zum Durchführen von chemischen bzw. biologischen Verfahren hervor, die mehrere Arbeitsstationen aufweist. Diese Arbeitsstationen sind u.a. ein Thermocycler, eine aktiv gekühlte Enzymspeicherstation, eine Waschstation, eine Reagenzienspeicherstation und eine DNA-Probenstation. Bei dieser bekannten Vorrichtung wird eine Pipettierspitze in einer Ebene parallel zur Grundplatte bewegt, um einen Flüssigkeitstransfer auszuführen. Die Reaktionsgefäße dieser Vorrichtung sind als Mulden in einem im Thermocycler fest angeordneten Metallblock ausgebildet. Die einzelnen Reagenzien werden zunächst in einem der sich im Thermocycler befindlichen Reaktionsgefäße pipettiert und anschließend einem Temperaturprofil unterzogen. Bevor eine weitere Reaktion ausgeführt werden kann, muß das bzw. müssen die Reaktionsgefäße gereinigt werden. Falls diese Reaktionsgefäße nicht vollständig gereinigt werden können, ergibt sich eine Kontamination der nachfolgenden Reaktionen, was bei sehr sensitiven Verfahren, wie dem PCR-Verfahren äußerst nachteilig ist. Zudem ist nachteilig, daß die Reaktionsgefäße als Mulden in einem Metallblock ausgebildet sind, die unmittelbar mit den Reagenzien in Kontakt kommen. Metallische Oberflächen können nicht immer absolut rückstandsfrei mit vertretbarem Aufwand gereinigt werden und bilden eine weitere Quelle für Verunreinigungen.

Mit Thermocyclern können vorbestimmte Temperaturverläufe bzw. Temperaturprofile abgefahren werden. Thermocycler werden insbesondere in der Gentechnik zum Sequenzieren und Amplifizieren von Nucleinsäuresequenzen verwendet. Solche Verfahren sind z.B. in EP 200 362 B1, EP 258 017 B1 und EP 201 184 B1 beschrieben.

Aus der DE 44 12 286 A1 und der EP 0 676 643 A2 ist ein System zum Verschließen von Probengefäßen mittels Deckel bekannt. Dieses System umfaßt eine Einrichtung zum Öffnen und Schließen der Reaktionsgefäße, die mittels eines Rastmechanismusses einen Deckel erfassen kann und wieder abgeben kann.

Aus SCIENCE, Juni 1997, Bd. 276, Seiten 1887, 1889, Hawkins T.L. et al. A Magnetic Attraction to High-Throughput Genomics, geht ein System hervor, das einen zentralen Roboter, einen Thermocycler, eine Pipettiereinrichtung und eine Steuereinrichtung umfasst. Die einzelnen Stationen sind mittels eines Netzwerkes verbunden und von der zentralen Steuereinrichtung steuerbar. Der Roboter kann Microtiterplatten zwischen den einzelnen Stationen hin und her bewegen.

Die US 5,552,580 beschreibt eine Vorrichtung zum Ausführen von temperaturgesteuerten Inkubationszyklen im Bereich der DNA-Forschung. Diese Vorrichtung umfasst eine Pipettiereinrichtung, einen Kontaktinkubator mit zwei klauenförmig angeordneten Heizplatten zwischen welchen eine Microtiterplatte angeordnet werden kann, um die Inkubationszyklen auszuführen. Die obere Heizplatte ist auf eine höhere Temperatur als die untere Heizplatte eingestellt, so dass eine Kondensation an der oberen Heizplatte vermieden wird. Die Microtiterplatte wird mittels eines Tablettes zwischen dem Kontaktinkubator und der Pipettiereinrichtung hin und her bewegt.

In EUROPEAN CLINICAL LABORATORY, Februar 1993 ist in einer Werbeanzeige der Rosys AG, Schweiz, eine Pipettiereinrichtung dargestellt, die eine Grundplatte und einen über der Grundplatte verfahrbaren Roboterarm aufweist. Am Roboterarm sind ein vertikal beweglicher Pipettierarm und ein Handhabungsarm zum Bewegen einer Mikrotiterplatte angeordnet. Der Pipitierarm und der Handhabungsarm sind entlang dem Roboterarm verfahrbar.

Der Erfindung liegt die Aufgabe zugrunde, eine Vorrichtung der eingangs genannten Art derart weiterzubilden, daß mit ihr automatisch und kontaminationsfrei das PCR-Verfahren ausgeführt werden kann.

Die Aufgabe wird durch eine Vorrichtung mit den Merkmalen des Anspruchs 1 gelöst. Vorteilhafte Ausgestaltungen sind in den Unteransprüchen angegeben.

Die Erfindung zeichnet sich dadurch aus, daß die Pipettiereinrichtung und der Thermocycler als räumlich getrennte Arbeitsstationen ausgebildet sind, und daß ein Handhabungsarm zum Bewegen von zumindest einem Probensubstanzen bzw. Chemikalien enthaltenden und separat von den Arbeitsstationen ausgebildeten Probengefäß vorgesehen ist.

Diese räumliche Trennung der Pipettiereinrichtung und des Thermocyclers und das Vorsehen von den Arbeitsstationen unabhängig ausgebildeter Reaktionsgefäße, die mittels eines Handhabungsarmes zwischen den einzelnen Arbeitsstationen bewegt werden, erlaubt eine vollautomatische Ausführung komplexer chemischer und biologischer Verfahren mit einem hohen Durchsatz, da sich gleichzeitig in der Pipettiereinrichtung und im Thermocycler Reaktionsgefäße befinden und entsprechend bearbeitet werden können und keine aufwendigen Reinigungsvorgänge an der Vorrichtung ausgeführt werden müssen. Dies führt dazu, daß quasi gleichzeitig und/oder aufeinanderfolgend mehrere komplexe Verfahren, die insbesondere mit völlig unterschiedlichen Reagenzien und Probensubstanzen arbeiten, vollautomatisch ausgeführt werden können.

Die erfindungsgemäße Vorrichtung erlaubt somit, daß das PCR-Verfahren vollautomatisch und kontaminationsfrei ausgeführt werden kann. Dies stellt eine wesentliche Vereinfachung und eine deutliche Verbesserung der Genauigkeit und Sicherheit der Arbeitsvorgänge dar.

Die erfindungsgemäße Vorrichtung weist eine Einrichtung zum automatischen Öffnen und Schließen von Probengefäßen mittels Deckel auf. Herkömmlicherweise wurde bei automatisch arbeitenden Vorrichtungen das Probengefäß mittels einer Wachs- oder Ölschicht verschlossen. Diese Art des Verschließens hat sich bei der manuellen Durchführung von chemischen und biologischen Reaktionen bewährt. Die Verwendung von lösbar an den Gefäßen befestigten Deckeln weist beim automatisierten Betrieb wesentliche Vorteile gegenüber den herkömmlich verwendeten Wachs- und Ölschichten auf. So kann ein einmal mit Reagenzien und/oder Probensubstanzen gefülltes und mit einem Deckel verschlossenes Gefäß wieder geöffnet und zusätzliche Reagenzien und Probensubstanzen hinzugefügt werden. Die Reagenzien und Probensubstanzen werden mittels einer Pipettierspitze in das Reaktionsgefäß eingebracht, wobei die Pipettierspitze mit kurzem Abstand über dem Flüssigkeitsspiegel im Reaktionsgefäß gehalten wird, so daß keine Berührung der Reaktionsspitze mit den im Reaktionsgefäß enthaltenen Reagenzien und Probensubstanzen erfolgt. Hierdurch wird sicher eine Kontaminierung durch Übertragung von Reagenzien und Probensubstanzen von einem Reaktionsgefäß zu einem anderen Reaktionsgefäß vermieden.

Beim herkömmlichen Versiegeln der Reaktionsgefäße muß die Pipettierspitze beim Pipettieren durch die Wachs- bzw. Ölschicht hindurch stechen und in die im Reaktionsgefäß befindliche Flüssigkeit eintauchen. Bevor man mit der gleichen Pipettenspitze einem weiteren Reaktionsgefäß z.B. die gleiche Substanz zuführen kann, muß die Pipettenspitze gereinigt oder ausgetauscht werden. Dies ist bei einer manuellen Ausführung von chemischen und biologischen Reaktionen üblich, erhöht bei einer vollautomatischen Ausführung der Reaktionen die Bearbeitungszeit und die Kosten.

Treten Bewegungen in der im Reaktionsgefäß enthaltenen Flüssigkeit, bspw. beim Bewegen des Reaktionsgefäßes oder bei einem Siedeverzug während einer Heizphase im Thermocycler auf, so kann eine solche Öl- bzw. Wachsschicht nicht sicher verhindern, daß die Flüssigkeit aus dem Reaktionsgefäß austritt und z.B. in ein benachbart angeordnetes Reaktionsgefäß schwappt.

Zudem ist beim Versiegeln mit Wachs nachteilig, daß dieses beim Abkühlen auf tiefe Temperaturen (z.B. 14°C) erstarrt und die weitere Behandlung behindert.

Die Ausführungsform nach Anspruch 2 mit einer multi-tasking-Steuerung erlaubt es, daß unterschiedliche Probensubstanzen, Applikationen usw. gleichzeitig mit dem Roboter abgearbeitet werden können, ohne daß hierzu eine Bedienperson zur Überwachung und Kontrolle der einzelnen Prozeßschritte notwendig ist. Hierdurch können komplexeste Verfahrensabläufe auf engstem Raum ohne die Gefahr von Fehlern durch Vertauschen oder dergleichen ausgeführt werden.

Die Erfindung wird nachfolgend beispielhaft anhand der beigefügten Zeichnungen näher erläutert. Sie zeigen schematisch in:

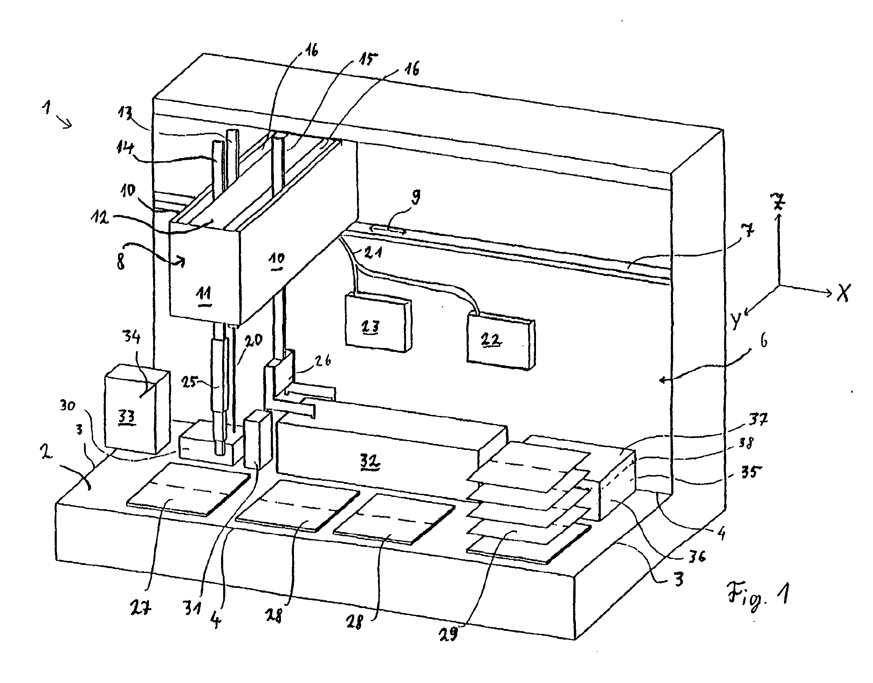

- Fig. 1: ein Ausführungsbeispiel einer erfindungsgemäßen Vorrichtung in perspektivischer Ansicht,
- Fig. 2: eine typische Anwendung in einem Flußdiagramm, und
- Fig. 3: eine weitere Anwendung in einem Flußdiagramm.

Die erfindungsgemäße Vorrichtung 1 weist eine rechteckförmige Grundplatte 2 mit zwei Stirnkanten 3 und einer vorderen und hinteren Längskante 4 auf..Auf der Grundplatte 2 ist an der hinteren Längskante 4 eine Rückenwandung 6 angeordnet. Am oberen Randbereich ist in der Rückenwandung 6 eine horizontale, zur hinteren Längskante 4 der Grundplatte 2 parallele Schiene 7 vorgesehen auf welcher ein Roboterarm 8 in Längsrichtung der Schiene 7 (Doppelpfeil 9, X-Richtung) verfahrbar angeordnet ist.

Der Roboterarm 8 ist ein geradliniger, steifer Arm, der parallel zu den Stirnkanten 3 der Grundplatte 2 angeordnet ist. Er steht somit senkrecht auf der Ebene der Rückenwandung 6. Der Roboterarm 8 weist zur äußeren Begrenzung zwei Längswandungen 10 und an seinem freien Ende eine Stirnwandung 11 auf, die in der Draufsicht U-förmig angeordnet sind. Zwischen den beiden Längswandungen 10 und mit Abstand zu diesen ist eine Schiene 12 angeordnet. An der Schiene 12 sind drei Z-Arme 13 - 15 in Längsrichtung der Schiene 12 (Y-Richtung) verfahrbar vorgesehen. Die Z-Arme 13 - 15 erstrecken sich jeweils vertikal durch einen Spalt 16 zwischen der Schiene 12 und den Längsseitenwandungen 10, wobei zwei der Z-Arme 13, 14 im linksseitigen Spalt 16 und der dritte Z-Arm 15 im rechtsseitigen Spalt 16 angeordnet sind.

Der Roboterarm 8 ist entlang der Schiene 7 (X-Richtung) und die Z-Arme 13 sind entlang (Y-Richtung) und senkrecht (Z-Richtung) zur Schiene 12 motorgetrieben verfahrbar, so daß die Z-Arme 13 - 15 im wesentlichen den gesamten Bereich (X-, Y-Richtung) oberhalb der Grundplatte 2 abfahren können und in der Höhe (Z-Richtung) verstellbar sind.

Der Z-Arm 13, der nachfolgend als Pipettierarm 13 bezeichnet wird, weist an seinem unteren Ende ein Aufnahmeelement für eine Pipettenspitze 20 (nur schematisch dargestellt) auf. Die Pipettenspitze ist über einen dünnen Schlauch 21 mit zwei Pumpen 22, 23 verbunden. Die Pumpe 22 ist eine sogenannte Spritzenpumpe (syringe pump), mit welcher kleinste Volumina (1 µl) exakt abgemessen und dosiert gepumpt werden können. Die zweite Pumpe 23 ist eine Waschpumpe, die einen größeren Durchsatz (z.B. ≥ 100 ml/min) als die Spritzpumpe 22 aufweist und zum Waschen der Pipettenspitze 20 verwendet wird.

Der Z-Arm 14, der nachfolgend als Deckelbetätigungsarm 14 bezeichnet wird, ist an seinem unteren Ende mit einer Einrichtung 25 zum automatischen Öffnen und Schließen von Gefäßen versehen, wie sie aus DE 44 12 286 A1 und EP 734 769 A1 bekannt sind. Die Einrichtung 25 kann mittels eines Rastmechanismusses einen Deckel erfassen und wieder lösen.

Die die Proben und Chemikalien enthaltenden Gefäße können bei Gefahr von Kontamination mit jeweils einem Deckel versehen sein, der vom Deckelbetätigungsarm 14 automatisch abgenommen und wieder aufgesetzt werden kann. Diese verschließbaren Gefäße werden beim PCR-Verfahren eingesetzt. Beim Sequenzieren ist die Gefahr einer Kontamination geringer, weshalb der Einsatz derart verschließbarer Gefäße nicht zwingend notwendig ist

Der dritte Z-Arm 15 wird nachfolgend als Handhabungsarm 15 bezeichnet. Er weist an seinem unteren Ende eine gabelförmige Halteeinrichtung 26 auf, mit welcher ähnlich wie bei Gabelstaplern Pipettierplatten (nicht dargestellt) aufgenommen, bewegt und wieder abgesetzt werden können. In den Pipettierplatten sind mehrere in einem Rechteckraster angeordnete, mit einem Deckel verschließbare Probengefäße ausgebildet. Diese Pipettierplatten können mit dem Handhabungsarm 15 auf der Grundplatte 2 beliebig versetzt werden.

Auf der Grundplatte 2 sind ein Probenhalter 27 und zwei Pipettierhalter 28 angeordnet. Der Probenhalter 27 und die Pipettierhalter 28 sind identisch ausgebildete Halterungen, auf welchen die Pipettierplatten einfach aufgesetzt werden. Die auf die Halterungen 27, 28 aufgesetzten Pipettierplatten sind durch diese exakt bzgl. der Grundplatte 2 ausgerichtet, so daß der Ort der einzelnen an den Pipettierplatten ausgebildeten Gefäße exakt festgelegt ist und diese vom Roboterarm, insbesondere dem Pipettierarm 13 und dem Deckelbetätigungsarm 14 genau angesteuert werden können. Die Pipettierhalter 28 legen Pipettierstationen fest, an welchen das Pipettieren ausgeführt wird.

Die Halter 27, 28 sind an der vorderen Längskante 4 der Grundplatte 2 angeordnet, so daß eine Bedienperson einfach Pipettierplatten darauf abstellen kann. Seitlich neben den Haltern 27, 28 ist eine Stapeleinrichtung 29 vorgesehen, die als kleines Regal zum Zwischenspeichern von mehreren, z.B. 5 - 10 Pipettierplatten ausgebildet ist.

Am rückwärtigen Bereich der Grundplatte 2 sind ein Chemikalienreservoir 30, eine Waschstation 31, ein Pipettenspitzenmagazin 32 für Einweg-Pipettenspitzen und ein Pipettenspitzenabstreifer 33 zum Abstreifen der Einweg-Pipettenspitzen vorgesehen. Die Einweg-Pipettenspitzen sind im Pipettenspitzenmagazin 32 vertikal angeordnet, so daß der Pipettierarm 13 lediglich durch Absenken seines unteren Endes in eine Einweg-Pipettenspitze eine solche aufnehmen kann. Nach Benutzung wird die Einweg-Pipettenspitze im Pipettenspitzenabstreifer 33 abgestriffen.

Am Pipettenspitzenabstreifer ist eine horizontal abstehender Zeiger 34 aus einem elektrisch leitendem und elastischem Material angeordnet. Als Einweg-Pipettenspitzen werden Einweg-Pipttenspitzen verwendet, die aus einem leitfähigem Material ausgebildet sind, wie z.B. einem Kunststoff, in dem Graphit eingelagert ist.

Nach dem Aufnehmen einer neuen Einweg-Pipettenspitze wird diese mit ihrem oberen, an den Pipettierarm 13 angrenzenden Randbereich mit dem Zeiger 34 in Kontakt oder in seine Nähe gebracht. Der Zeiger 34 ist mit einer Meßeinrichtung verbunden, die eine kapazitiven Messung ausführt. Aufgrund des Ergebnisses dieser kapazitiven Messung kann beurteilt werden, ob eine Einweg-Pipettenspitze am Pipettierarm vorhanden ist, oder ob die Aufnahme der Einweg-Pipettenspitze nicht funktioniert hat. Mit dem Zeiger und der Meßeinrichtung kann somit die Aufnahme einer neuen Einweg-Pipettenspitze kontrolliert werden. Ein wesentlicher Vorteil dieser Kontrolleinrichtung ist, daß bei der Kontrolle die Einweg-Pipettenspitze mit ihrem spitzen Ende nicht mit irgendeinem Gegenstand in Kontakt gebracht werden muß, wie es von herkömmlichen Kontrolleinrichtungen bekannt ist, sondern die Kontrolle der Aufnahme der Einweg-Pipettenspitzen absolut kontaminationsfrei erfolgen kann.

Bei Verwendung einer Mehrweg-Pipette kann diese bei Bedarf zwischen den einzelnen Pipettiervorgängen in die Waschstation 31 eingefügt und zum Reinigen mittels der Waschpumpe 23 mit einer größeren Menge an Wasser durchspült werden.

Im Chemikalienreservoir 30 sind mehrere nach oben offene Gefäße mit diversen Chemikalien angeordnet. Die Gefäße des Chemikalienreservoirs 30 können auch mittels Deckel verschlossen sein, die von dem Deckelbetätigungsarm 14 abgenommen und wieder aufgesetzt werden können.

Erfindungsgemäß ist ein Thermcyclerbehälter 35 auf der Grundplatte 2 angeordnet. Der Thermocyclerbehälter 35 besteht aus einem oben offenen Grundkörper 36, der mittels eines Deckels 37 verschlossen werden kann. Der Deckel 37 ist mit einem Scharniergelenk 38 am Grundkörper 36 befestigt, und um dieses Gelenk mittels eines Motors (nicht dargestellt) zum automatischen Öffnen und Schließen des Thermocyclerbehälters 35 verschwenkbar. Im Thermocyclerbehälter 35 sind Heiz- und Kühlelemente vorgesehen, die den Innenraum auf eine bestimmte Temperatur einstellen können. Mit den Heiz- und Kühlelementen ist es auch möglich, bestimmte Temperaturverläufe abzufahren. Als Heiz- und Kühlelement wird vorzugsweise ein Peltierelement verwendet, das sowohl Wärme ab- als auch zuführen kann. Ein typischer Temperaturbereich eines solchen Thermocyclers erstreckt sich von -5°C bis 120°C, und die Temperatur kann mit einer Heiz-/Kühlrate von 2°C/s bis 5°C/s verändert werden.

Die erfindungsgemäße Vorrichtung weist eine zentrale Steuereinrichtung auf, die sowohl die Bewegung des Roboterarms 8 mit seinen Z-Armen 13 bis 16, als auch die einzelnen Funktionselemente, wie z.B. die Pumpen 22, 23, und den integrierten Thermocycler ansteuert. Diese Steuereinrichtung ist in der Rückenwandung 6 angeordnet. Sie kann aber auch in einem separaten Gehäuse untergebracht sein oder durch einen separaten Computer dargestellt werden. Die Steuereinrichtung ist vorzugsweise eine prozessorgesteuerte Vorrichtung und als multi-tasking-Steuerung ausgebildet, d.h., daß sie gleichzeitig mehrere Steuerungsvorgänge ausführen und überwachen kann.

Die Steuereinrichtung ist mit einer Schnittstelle zu einem Computer versehen. Im Computer sind mehrere Datenbanken abgespeichert, in welchen die Daten für die einzelnen Applikationen, Probenverwaltung, Chemikalien und Cycler-Programme enthalten sind. Ein Benutzer muß lediglich eine zu untersuchende bzw. zu bearbeitende Probe eingeben, die Art der Applikation (Sequenzieren, Amplifizieren, usw.), die Chemikalien und das Cyclerprogramm auswählen, sofern die letzteren Daten (Chemikalien, Cyclerprogramm) nicht bereits durch die Applikation vorgegeben sind, und die Probe auf dem Probenhalter 27 plazieren.

Die erfindungsgemäße Vorrichtung öffnet dann mit dem Deckelbetätigungsarm 14 die die Probensubstanzen und Chemikalien enthaltenden Gefäße, überträgt Teile der Probensubstanzen in die Reaktionsgefäße der auf den Pipettierhaltern 28 angeordneten Pipettierplatten und versetzt die Probensubstanzen mit den entsprechenden Chemikalien aus dem Chemikalienreservoir 30. Beim Pipettieren werden die Pipettenspitzen vorzugsweise mit geringem Abstand über dem Flüssigkeitsspiegel in den Reaktionsgefäßen gehalten. Hierdurch wird verhindert, daß Reagenzien und Probesubstanzen eines Reaktionsgefäßes in ein anderes Reaktionsgefäß übertragen werden. Dies ist besonders von Vorteil, wenn mehreren Reaktionsgefäßen einer Pipettierplatte die gleiche Substanz zugeführt werden soll, da dies ohne Reinigung der Pipettenspitze zwischen den einzelnen Pipettiervorgängen schnell ausgeführt werden kann.

Die Pipettierplatten werden nach dem Pipettieren vom Handhabungsarm 15 entweder direkt in den Thermocyclerbehälter 35 eingesetzt oder an der Stapeleinrichtung 29 zwischengespeichert und zu einem geeigneten späteren Zeitpunkt dem Thermocyclerbehälter 35 zugeführt.

Während im Thermocyclerbehälter 35 eine Probe einem bestimmten Temperaturverlauf unterzogen wird, kann eine weitere Probe mit anderen Probensubstanzen und einer anderen Applikation bereits pipettiert werden.

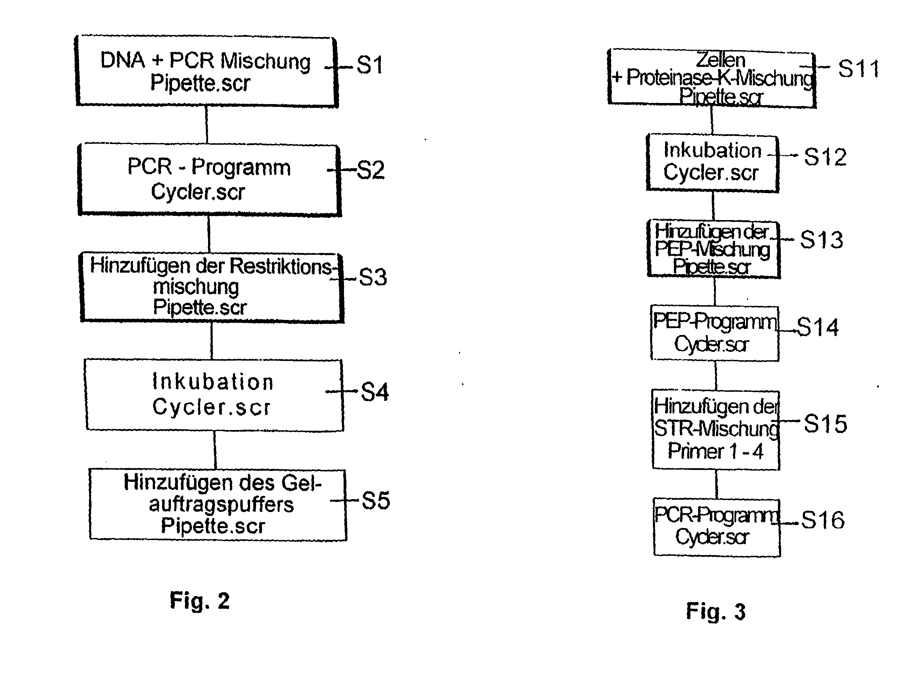

Fig. 2 zeigt ein Flußdiagramm einer typischen, einfachen Applikation der erfindungsgemäßen Vorrichtung zum Amplifizieren einer DNA-Probe. Bei dieser Applikation soll eine DNA-Probe amplifiziert, dann sequenzspezifisch gespalten und für eine e-lektrophoresische Untersuchung vorbereitet werden.

Hierzu wählt der Bediener an einem auf einem Bildschirm des Computers dargestellten Menü die Probensubstanz, eine vorbestimmte Mischung von für das Amplifizieren geeigneten Enzymen, eine weitere vorbestimmte Mischung für das sequenzspezifische Spalten der amplifizierten DNA-Probe und ein Gel und eine Pufferlösung zur Vorbereitung der elektrophoresischen Untersuchung.

Der Computer erstellt dann selbsttätig sogenannte Pipettier-(Pipette.scr) und Thermocycler-Scripte (Cycler.scr) nach Maßgabe der festgelegten Probensubstanzen und Reagenzien. Diese Scripte enthalten alle zum Füllen der Reaktionsgefäße und zum Inkubieren notwendigen Steuerbefehle, einschließlich der Transportbefehle zum Bewegen der Pipettierplatten und der Befehle zum Öffnen und Schließen der Deckel. Die Thermocycler-Scripte enthalten auch das im Thermocycler auszuführende Temperaturprofil, das bei Bedarf manuell abgeändert werden kann.

Während eines ersten Arbeitsschrittes S1 wird ein Pipettierscript ausgeführt. Hierdurch werden die Gefäße einer Pipettierplatte mit den ausgewählten Probensubstanzen und Reagenzien gefüllt und danach die Pipettierplatte dem Thermocycler zugeführt.

Bei einem zweiten Schritt S2 wird im Thermocycler ein Temperaturprofil abgefahren, um die DNA-Probe gemäß einem an sich bekannten PCR-Verfahren zu amplifizieren. Ist der Amplifikationsvorgang abgeschlossen, wird die Pipettierplatte zu einem Pipettierhalter bewegt.

Im Schritt S3 wird ein weiteres Pipettierscript ausgeführt, wobei den Reaktionsgefäßen eine vorbestimmte Mischung von Restriktionsendonucleasen hinzugefügt werden. Die Pipettierplatte wird dann wieder zum Thermocycler transportiert und in diesen eingesetzt.

Im nachfolgenden Schritt S4 werden die DNA-Proben sequenzspezifisch gespalten, indem sie z.B. für 2 Stunden einer Temperatur von 37°C unterzogen werden, bei welcher die Restriktionsendonucleasen besonders aktiv sind. Danach wird die Temperatur kurzzeitig auf z.B. 95°C erhöht, wodurch die Restriktionsendonucleasen deaktiviert werden. Ist das Spalten der DNA-Proben abgeschlossen, wird die Pipettierplatte wieder zu einer der Pipettierhalterungen 28 bewegt.

Bei einem Schritt S5 werden den Reaktionsgefäßen Gel und eine Pufferlösung zur Vorbereitung einer elektrophoresischen Untersuchung hinzugefügt.

Die Pipettierplatte mit den fertig aufbereiteten DNA-Sequenzen kann nun von einer Bedienperson abgenommen oder automatisch in der Stapeleinrichtung 29 abgestellt werden.

Fig. 3 zeigt den Ablauf eines weiteren Verfahrens, das mit der erfindungsgemäßen Vorrichtung vollautomatisch ausgeführt werden kann. Dieses Verfahren dient zur Bestimmung von Längenpolymorphismen in DNA-Bereichen, wie es bspw. im Patent EP 438 512 B1 (=US 5,766,847) beschrieben ist.

Die Probensubstanz weist hierbei vollständige Zellen auf, die mittels einer Proteinase K in den Schritten S11 und S12 lysiert werden.

Im Schritt S13 wird ein Gemisch aus Zufalls-Primern (PEP; Primer-Extension-Protocol) hinzugefügt und im Schritt S14 gemäß einem PCR-Verfahren amplifiziert.

Danach wird im Schritt S15 eine Mischung aus mehreren Primern und Enzymen zur Detektion von sich wiederholenden simplen bzw. kryptisch simplen DNA-Sequenzen (STR; Short-Tandem-Repeats) zugegeben und anschließend das entsprechende PCR-Verfahren ausgeführt (Schritt S16).

Die in den Fig. 2 und 3 dargestellten Verfahren bzw. Applikationen sind lediglich zwei Beispiele einer Vielzahl von Anwendungsmöglichkeiten der erfindungsgemäßen Vorrichtung. Mehrere dieser Applikationen sind in der Steuereinrichtung vorab programmiert. Der Bediener kann jedoch auch eigene Applikationen mit einer beliebigen Folge von Pipettier- und Thermocycler-Scripten zusammenstellen. Die Verfahren können beliebig kompliziert sein und z.B. ein Umschreiben von RNAs auf DNAs umfassen und sind mit der erfindungsgemäßen Vorrichtung dennoch vollautomatisch durchführbar.

Insbesondere können unterschiedliche Applikationen gleichzeitig bzw. aufeinanderfolgend automatisch ausgeführt werden, ohne daß ein Bediener die einzelnen Verfahrensschritte überwachen muß. Es ist auch möglich, daß eine Anwendung im Thermocycler und eine andere Anwendung an der Pipettierstation gleichzeitig abgearbeitet wird. Hierzu ist die Steuereinrichtung mit einer zusätzlichen Funktion ausgestattet, die den in der Regel zeitlich kürzeren Pipettiervorgang so startet, daß er gleichzeitig mit der parallel im Thermocycler ablaufenden Inkubation endet. Das beim Pipettiervorgang aufbereitete Gemisch wird somit ohne Standzeit dem Thermocycler zugeführt, wodurch unerwünschte Reaktionen vermieden werden.

Mit der Erfindung wird somit eine Vorrichtung geschaffen, die die vollständige automatische Abarbeitung komplexer chemischer bzw. biologischer Verfahren, insbesondere PCR-Verfahren erlaubt, wobei eine maximale Flexibilität bzgl. der Art des angewandten Verfahrens erzielt wird. Es können somit komplexeste Verfahrensabläufe auf engstem Raum ohne der Gefahr von Fehlern durch Vertauschen oder dergleichen ausgeführt werden. Komplexeste chemische bzw. biologische Verfahren, insbesondere das Sequenzieren und Amplifizieren von Nucleinsäuresequenzen, können vollautomatisch mit hoher Effizienz und hohem Durchsatz durchgeführt werden.

## Patentansprüche

1. Vorrichtung zum automatischen Durchführen des PCR-Verfahrens, mit einer Pipettiereinrichtung und einem Thermocycler, in dem eine Pipettierplatte aufgenommen werden kann, wobei die Pipettiereinrichtung (27, 28) einen Pipettierarm (13) zum Pipettieren von Probensubstanzen und/oder Chemikalien aufweist,
die Pipettiereinrichtung und der Thermocycler als räumlich getrennte Arbeitsstationen ausgebildet und auf einer Grundplatte (2) der Vorrichtung angeordnet sind, und
eine Handhabungseinrichtung (15) zum Bewegen von Pipettierplatten im wesentlichen im gesamten Bereich der Grundplatte (2) vorgesehen ist, wobei die Pipettierplatten Probensubstanzen bzw. Chemikalien enthaltende und separat von den Arbeitsstationen ausgebildete Probengefäße aufweisen, und die Vorrichtung (1) einen Deckelbetätigungsarm (14) zum automatischen Öffnen und Schließen von Gefäßen aufweist,
wobei die Handhabungseinrichtung und der Pipettierarm (13) an einem Roboterarm (8) angeordnet sind, der auf einer horizontalen, oberhalb und parallel zur Grundplatte (2) angeordneten Schiene (7) in Längsrichtung der Schiene (7) verfahrbar angeordnet ist, und
daß der Pipettierarm (13) und der Handhabungsarm (15) jeweils am Roboterarm (8) angeordnet und vertikal und in Längsrichtung des Roboterarms (8) verfahrbar sind.

2. Vorrichtung nach Anspruch 1,
**dadurch gekennzeichnet,**
**daß** die Vorrichtung (1) eine Steuereinrichtung zum Ansteuern eines Pipettierarms (13), eines Handhabungsarms (15) und des Thermocyclers (35-38) aufweist, wobei die Steuereinrichtung als multi-tasking-Steuereinrichtung ausgebildet ist.

3. Vorrichtung nach Anspruch 1 oder 2,
**dadurch gekennzeichnet,**
**daß** der Pipettierarm (13) an seinem unteren Ende eine Pipettenspitze aufnehmen kann und diese über einen dünnen Schlauch (21) mit zumindest einer Pumpe (22, 23) verbunden ist,
**daß** sowohl eine fein dosierbare Pumpe (22), z.B. eine Spritzenpumpe, als auch eine Pumpe (23) mit einem höheren Durchsatz als die fein dosierbare Pumpe (22) zum Spülen einer Mehrweg-Pipettenspitze mit der Pipettenspitze verbunden sind, und
**daß** die Vorrichtung (1) ein Pipettenspitzenmagazin (32) für Einweg-Pipettenspitzen und einen Pipettenspitzenabstreifer (33) zum Abstreifen der Einweg-Pipettenspitzen aufweist.

4. Vorrichtung nach einem der Ansprüche 1 bis 3.
**dadurch gekennzeichnet,**
**daß** der Pipettierarm (13), der Deckelbetätigungsarm (14) und der Handhabungsarm (15) jeweils als vertikal angeordnete und vertikal und in Längsrichtung des Roboterarms (8) verfahrbare Arme ausgebildet sind.

5. Vorrichtung nach einem der Ansprüche 1 bis 4,
**dadurch gekennzeichnet,**
**daß** die Vorrichtung (1) eine Stapeleinrichtung (29) zum Zwischenspeichem von Probensubstanzen bzw. Chemikalien enthaltenden Gefäßen, insbesondere von Pipettierplatten, an welchen derartige Gefäße ausgebildet sind, aufweist.

6. Vorrichtung nach einem der Ansprüche 1 bis 5,
**dadurch gekennzeichnet,**
**daß** der Thermocycler einen Behälter bestehend aus einem Grundkörper (36) und einem Deckel (37) zum Verschließen des Behälters (35) aufweist, wobei ein Stellglied zum selbsttätigen Öffnen und Schließen des Behälters (35) vorgesehen ist.

7. Vorrichtung nach einem der Ansprüche 1 bis 6,
**dadurch gekennzeichnet,**
**daß** zum Kontrollieren, ob eine Einweg-Pipettenspitze an einem Pipettierarm (13) angeordnet ist, ein elektrisch leitender, frei abstehender Zeiger (34) vorgesehen ist, der mit einer Meßeinrichtung verbunden ist.

8. Verfahren zum Ansteuern einer Vorrichtung nach einem der Ansprüche 1 bis 7,
**dadurch gekennzeichnet,**
**daß** beim Pipettieren eine Pipettierspitze mit Abstand über dem Flüßigkeistspiegel im jeweiligen Reaktionsgefäß gehalten wird.

9. Verfahren zum Ansteuern einer Vorrichtung nach einem der Ansprüche 1 bis 7, insbesondere nach Anspruch 8,
**dadurch gekennzeichnet,**
**daß** zwei unterschiedliche Applikationen gleichzeitig ausgeführt werden, wobei die Steuereinrichtung den Beginn eines Pipettiervorganges und einer Inkubation im Thermocycler selbsttätig derart festlegt, daß sie im wesentlichen gleichzeitig enden.

## Claims

1. Device for automatically carrying out the PCR-process, with a pipetting device and a thermocycler for taking up a pipetting plate, the pipetting device (27, 28) having a pipetting arm (13) for pipetting sample substances and/or chemicals,
the pipetting device and the thermocycler are formed as spatially separated workstations and arranged on a base plate (2) of the device, and
a handling device (15) is provided for moving pipetting plates substantially in the whole area of the base plate (2), wherein the pipetting plates comprise reaction vessels containing sample substances or chemicals and the reaction vessels are configured separately from said workstations is provided, and
the device (1) comprises a cover actuating arm (14) for automatically opening and closing said vessels,
wherein the handling device and the pipetting arm (13) being arranged on a robotic arm (8), being arranged for travelling in the longitudinal direction of the rail (7), which is arranged horizontally, above and parallel to the base plate (2); the pipetting arm (13) and the handling arm (15) each being arranged on the robotic arm (8) for travelling vertically and in the longitudinal direction of the robotic arm (8).

2. Device according to claim 1
**characterised in that**
the device (1) has a control device for activating a pipetting arm (13), a handling arm (15) and the thermocycler (35 to 38), the control device being formed as a multi-tasking control device.

3. Device according to claim 1 or 2,
**characterised in that**
the pipetting arm (13) can receive a pipette tip at its lower end and this pipette tip is connected via a thin tube (21) to at least one pump (22, 23),
**in that** both a finely metering pump (22), for example a syringe pump, and a pump (23) with a higher flow rate than the finely metering pump (22) are connected to the pipette tip for rinsing a re-useable pipette tip, and
**in that** the device (1) has a pipette tip magazine (32) for disposable pipette tips and a pipette tip removal device (33) for removing the disposable pipette tips.

4. Device according to one of claims 1 to 3,
**characterised in that**
the pipetting arm (13), the lid actuating arm (14) and the handling arm (15) are formed as vertically arranged arms which can be moved vertically and in longitudinal direction of the robotic arm (8).

5. Device according to one of claims 1 to 4
**characterised in that**
the device (1) has a stacking device (29) for the intermediate storage of vessels containing sample substances or chemicals, in particularly of pipetting plates on which such vessels are formed.

6. Device according to one of claims 1 to 5,
**characterised in that**
the thermocycler has a container consisting of a base element (36) and a lid (37) for sealing the container (35), an adjusting member being provided for automatically opening and closing the container (35).

7. Device according to one of claims 1 to 6,
**characterised in that**
an electrically conductive, freely projecting pointer (34) is provided which is connected to a measuring device in order to check whether a disposable pipetting tip is arranged on the pipetting arm (13).

8. Process for activating a device to one of claims 1 to 7
**characterised in that**
a pipetting tip is held at a distance above the level of a liquid in the respective reaction vessel during pipetting.

9. Process for activating a device according to one of claims 1 to 7, in particular according to claim 8,
**characterised in that**
two different applications are carried out simultaneously, the controller device automatically determining the start of a pipetting process and an incubation in the thermocycler in such a way that they end substantially at the same time.

## Revendications

1. Appareil pour la mise en oeuvre automatique du procédé PCR, comprenant un dispositif de pipettage et un thermocycleur, dans lequel peut être reçue une plaque de pipettage, ledit dispositif de pipettage (27, 28) comprenant un bras de pipettage (13) pour pipetter des substances échantillons et/ou des produits chimiques,
le dispositif de pipettage et le thermocycleur sont réalisés sous forme de postes de travail séparés dans l'espace et sont agencés sur une plaque de base (2) de l'appareil, et
un dispositif de manipulation (15) pour déplacer des plaques de pipettage sensiblement dans la région entière de la plaque de base (2), les plaques de pipettage présentant des récipients d'échantillonnage qui contiennent des substances échantillons ou des produits chimiques et qui sont réalisés séparément des postes de travail, et l'appareil (1) comprend un bras d'actionnement de couvercle (14) pour l'ouverture et la fermeture automatique des récipients,
dans lequel le dispositif de manipulation et le bras de pipettage (13) sont agencés sur un bras d'automate (8) qui est agencé avec possibilité de déplacement, sur un rail horizontal (7) disposé au-dessus et parallèlement à la plaque de base (2), en direction longitudinale du rail (7), et
en ce que le bras de pipettage (13) et le bras de manipulation (15) sont agencés respectivement sur le bras d'automate (8) et capables de se déplacer verticalement et en direction longitudinale du bras d'automate (8).

2. Appareil selon la revendication 1,
**caractérisé en ce que** l'appareil (1) comprend un dispositif de commande pour piloter un bras de pipettage (13), un bras de manipulation (15), et le thermocycleur (35-38), ledit dispositif de commande étant réalisé sous forme de dispositif de commande multitâches.

3. Appareil selon la revendication 1 ou 2, **caractérisé en ce que** le bras de pipettage (13) est capable de recevoir à son extrémité inférieure une pointe de pipette, laquelle est reliée via un tuyau flexible mince (21) à au moins une pompe (22, 23),
aussi bien une pompe à dosage fin (22), comme par exemple une pompe de pulvérisation, qu'une pompe (23) à débit plus élevé que la pompe à dosage fin (22) sont reliées à la pointe de pipette pour le rinçage d'une pointe de pipette à usages multiples, et
**en ce que** l'appareil (1) comprend un magasin de pointes de pipettes (32) pour des pointes de pipettes à usage unique, et un racleur de pointes de pipettes (33) pour racler les pointes de pipettes à usage unique.

4. Appareil selon l'une des revendications 1 à 3,
**caractérisé en ce que** le bras de pipettage (13), le bras d'actionnement de couvercle (14), et le bras de manipulation (15) sont réalisés respectivement sous forme de bras agencés verticalement et déplaçables verticalement et en direction longitudinale du bras d'automate (8).

5. Appareil selon l'une des revendications 1 à 4,
**caractérisé en ce que** l'appareil (1) comprend un dispositif d'empilement (29) pour le stockage intermédiaire de récipients contenant des substances échantillons ou des produits chimiques, et en particulier des plaques de pipettage dans lesquelles sont réalisés de tels récipients.

6. Appareil selon l'une des revendications 1 à 5,
**caractérisé en ce que** le thermocycleur comprend un réceptacle constitué d'un corps de base (36) et d'un couvercle (37) pour refermer le réceptacle (35), et dans lequel est prévu un élément de positionnement pour l'ouverture et la fermeture automatiques du réceptacle (35).

7. Appareil selon l'une des revendications 1 à 6,
**caractérisé en ce que**, pour contrôler si une pointe de pipette à usage unique est agencée sur un bras de pipettage (13), il est prévu un doigt (34) électriquement conducteur et en dépassement libre, lequel est relié à un dispositif de mesure.

8. Procédé pour piloter un appareil selon l'une des revendications 1 à 7,
**caractérisé en ce que** lors du pipettage, une pointe de pipette est tenue à distance au-dessus du niveau du liquide dans le récipient de réaction respectif.

9. Procédé pour le pilotage d'un appareil selon l'une des revendications 1 à 7, en particulier selon la revendication 8, **caractérisé en ce que** l'on exécute simultanément deux applications différentes, et dans lequel le dispositif de commande détermine automatiquement le début d'une opération de pipettage et d'une incubation dans le thermocycleur de telle manière qu'elles se terminent sensiblement simultanément.
